# EUROPÄISCHE PATENTSCHRIFT

(11) **EP 1 504 644 B1**
(45) Veröffentlichungstag und Bekanntmachung des Hinweises auf die Patenterteilung: **21.03.2007**
(21) Anmeldenummer: 04018253.7
(22) Anmeldetag: 02.08.2004
(51) Int. Cl.: A01C 17/00, A01C 15/00

(54) **Schleuderdüngerstreuer**
Centrifugal fertilizer spreader
Epandeur d'engrais centrifuge

(30) Priorität: 05.08.2003 DE 10335765
(43) Veröffentlichungstag der Anmeldung: 09.02.2005
(73) Patentinhaber: Amazonen-Werke H. Dreyer GmbH & Co. KG, 49205 Hasbergen (DE)
(72) Erfinder: Fölster, Nils, 49504 Lotte (DE)

(56) Entgegenhaltungen:
- DE-A- 19 607 618
- FR-A- 2 683 698
- US-A- 3 063 723
- US-A- 5 163 531

## Beschreibung

Die Erfindung betrifft einen Schleuderdüngerstreuer gemäß des Oberbegriffes des Patentanspruches 1.

Ein derartiger Schleuderdüngerstreuer ist beispielsweise in der EP 0 501 202 A1 beschrieben. Gemäß einer Ausführungsform kann der dort vorgesehene Schutzbügel in eine Position weggeklappt werden, so dass der als Trittstufe für die Bedienungsperson dienen kann. Zusätzlich können Bügelteile an dem Schutzbügel angeordnet werden, so dass eine Art "Leiter" geschaffen wird. Diese zusätzlichen Bügelteile verlaufen parallel zu dem Schutzbügel. Durch diese die Trittstufen bildenden zusätzlichen Bügelteile ergibt sich eine große Ausdehnung des Schutzbügels.

Der Erfindung liegt die Aufgabe zugrunde, eine vorteilhafte Anbringung eines Leiterelementes an einem Schleuderdüngerstreuer mit einer bequemen Aufstiegsmöglichkeit auf dem Leiterelement zu erreichen.

Diese Aufgabe wird erfindungsgemäß dadurch gelöst, dass das Leiterelement mehrere Leitersprossen aufweist, dass das Leiterelement aus einer liegenden Schutzposition in eine aufrechte Aufstiegsposition und umgekehrt bringbar ist.

Infolge dieser Maßnahme wird ein kompaktes Leiterelement geschaffen, welches in der liegenden Schutzposition als Schutzelement dient und in der aufrechten Aufstiegsposition die Leiterfunktion ausübt. Somit kann die Leiter in der aufrechten Stellung bequem und sicher bestiegen werden. Durch diese neuartige Ausgestaltung des Leiterelementes übernimmt das Leiterelement sowohl die Schutzfunktion als auch die Leiterfunktion.

In einer Ausführungsform ist vorgesehen, dass das Leiterelement um eine in Fahrtrichtung des Streuers weisende Drehachse verdrehbar angeordnet ist. Hierdurch lässt sich das Leiterelement sehr leicht in die beiden vorgesehenen Positionen bringen. Um einen äußerst vorteilhaften Aufstieg auf dem Leiterelement zu ermöglichen, so dass die Leiter geneigt angeordnet ist, ist vorgesehen, dass die Drehachse des Leiterelementes geringfügig nach schräg vorn unten geneigt ist. Um eine sichere Anordnung des Leiterelementes in der jeweiligen Position zu gewährleisten, ist vorgesehen, das Leiterelement in der Schutz- und in der Aufstiegsposition jeweils mittels Verriegelungsmittel festsetz- und/oder verriegelbar ist.

Eine einfache Anordnung wird dadurch erreicht, dass das Leiterelement mittels eines Drehgelenkes am Rahmen angeordnet ist.

In einer anderen Ausgestaltung ist vorgesehen, das Leiterelement mittels geeigneter Mittel wahlweise in die Schutzposition oder in die Aufstiegsposition an dem Streuer einhängbar ist.

In einer weiteren Ausgestaltung ist vorgesehen, dass das Leiterelement in seiner Schutzposition mit den Trägerelementen der Beleuchtungseinrichtung verbindbar ist. Infolge dieser Maßnahmen kann das Leiterelement an bereits am Streuer vorhandenen Trägerelement in die Schutzposition angebracht werden.

Um in den Schutzbügel eine integrierte Sicherheitsfunktion an zu zuweisen, sind Mittel vorhanden, die bei Entfernen des Leiterelementes aus der Schutzposition den Antrieb der Schleuderscheiben abschalten.

Die gleiche integrierte Schutzfunktion kann dadurch erreicht werden, dass Mittel vorhanden sind, die bei nicht abgeschaltetem Antrieb der Schleuderscheiben in der Schutzposition zwangsweise das Leiterelement verriegeln.

Weitere Einzelheiten der Erfindung sind den übrigen Unteransprüchen, der Beispielsbeschreibung und den Zeichnungen zu entnehmen.

Hierbei zeigen:
- Fig. 1: den Düngerstreuer mit sich in Schutzposition befindlichen Leiterelement in der Ansicht von hinten und in Prinzipdarstellung,
- Fig. 2: den Düngerstreuer nach Fig. 1, wobei das Leiterelement in Aufstiegsposition angeordnet ist.
- Fig. 3: den Schleuderdüngerstreuer mit sich in Schutzposition befindlichen Leiterelement in Seitenansicht und Prinzipdarstellung,
- Fig. 4: den Schleuderdüngerstreuer gemäß Fig. 3 jedoch sich in Aufstiegsposition befindlichen Leiterelement,
- Fig. 5: einen weiteren Düngerstreuer mit sich in Schutzposition befindlichen Leiterelement in Seitenansicht und Prinzipdarstellung und
- Fig. 6: den Schleuderdüngerstreuer gemäß Fig. 5 jedoch mit sich in Aufstiegsposition befindlichen Leiterelement.

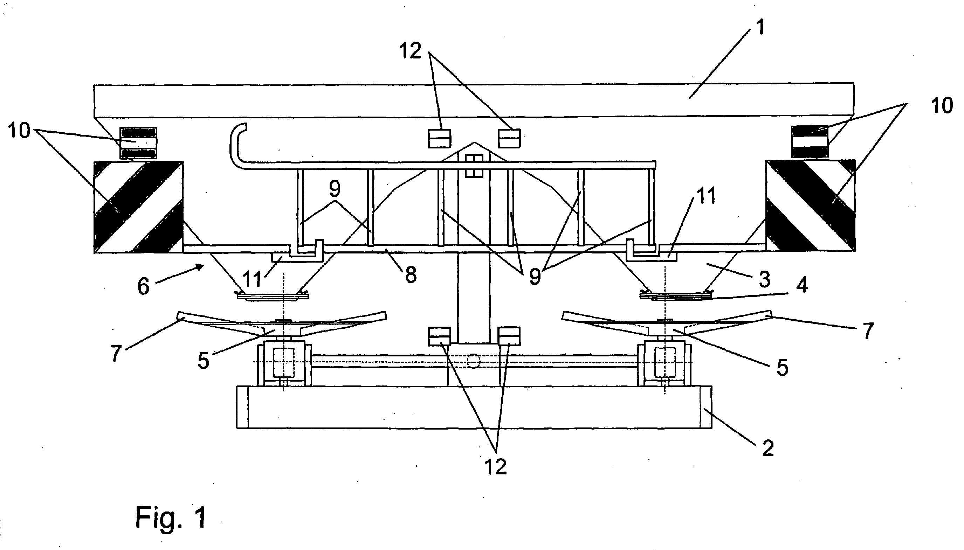

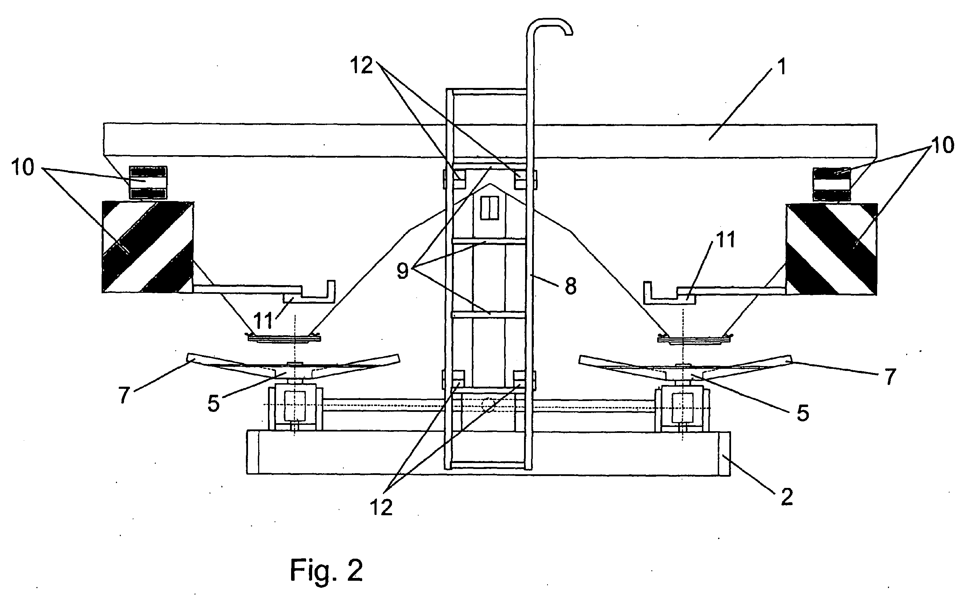

Die Fig. 1 und 2 zeigen einen Schleuderdüngerstreuer mit Vorratsbehälter 1 und Rahmen 2. Unterhalb der Auslauftrichter 3 des Vorratsbehälters 1, die durch Dosierelemente 4 abgeschlossen sind, sind rotierend angetriebene Schleuderscheiben 5 angeordnet. An dem Streuer ist ein Schutzelement 6, welches in Draufsicht gesehen außerhalb der äußeren Teile 7 der Schleuderscheiben 5 sich befindet, angeordnet. In Teilbereichen ist das Schutzelement 6 als Leiterelement 8 ausgebildet. Das Leiterelement 8 weist mehrere Leitersprossen 9 auf, die bei sich in Schutzposition befindlichen Leiterelement 8 senkrecht verlaufen, wie in Fig. 1 dargestellt.

Das Leiterelement 8 kann die in Fig. 2 dargestellte aufrechte Aufstiegsposition an dem Streuer gebracht werden. In der Schutzfunktion ist das Leiterelement 8 an den Trägerelementen 1 der Beleuchtungseinrichtung 10 mittels an diesen angebrachten Einhängelementen 11 eingehängt. In der in Fig. 2 dargestellten Schutzposition ist das Leiterelement 8 an den am Rahmen 2 und am Vorratsbehälter 1 angeordneten Einhängelementen 12 eingehängt.

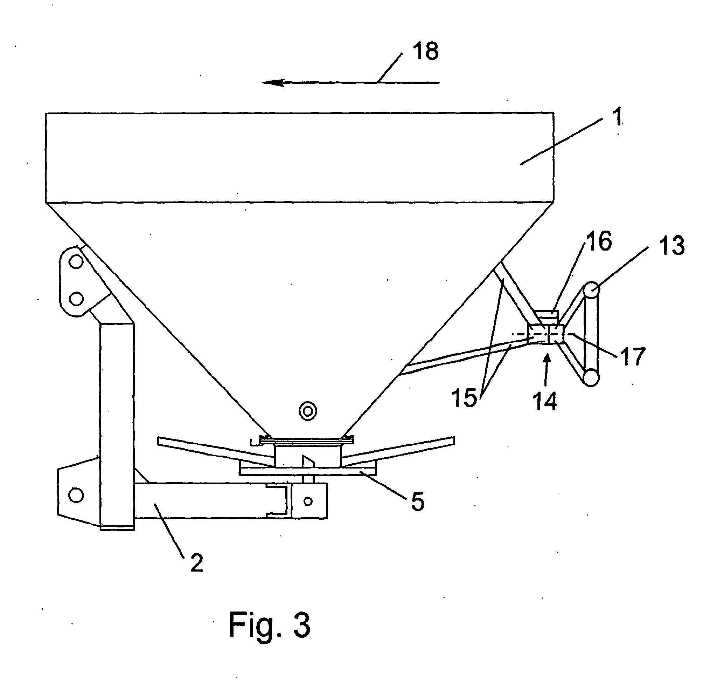

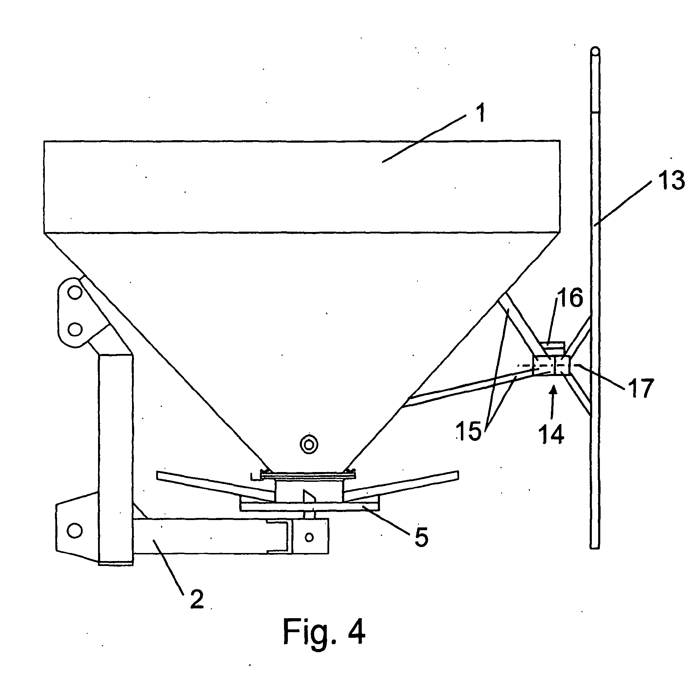

Bei dem Ausführungsbeispiel nach den Fig. 3 und 4 ist das Leiterelement 13 mittels eines Drehgelenkes 14 über Verbindungselemente 15 am Vorratsbehälter 1 angeordnet. Mittels nicht näher dargestellter Verriegelungsmittel 16 wird das Leiterelement 13 in der Schutzposition in der dargestellten liegenden Position verriegelt. Um das Leiterelement 13 in die in Fig. 4 dargestellte aufrechte Aufstiegsposition zu bringen, werden die Verriegelungselemente 16 in nicht entriegelter Stellung gebracht, so dass das Leiterelement 13 um die Drehachse 17, die in Fahrtrichtung 18 verläuft, in die aufrechte Aufstiegsposition gedreht werden kann. In dieser Aufstiegsposition wird das Leiterelement 13 dann mittels des Verriegelungselementes 18 verriegelt.

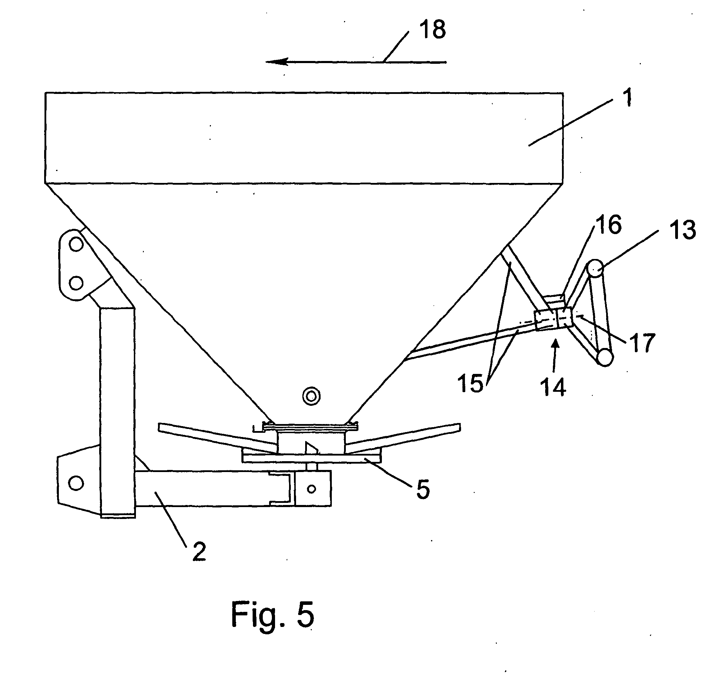

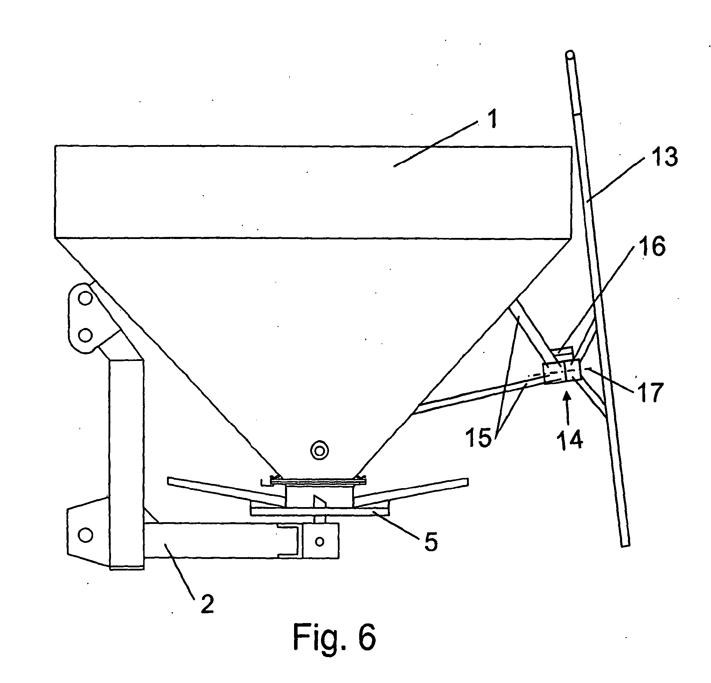

Das Ausführungsbeispiel gemäß den Fig. 5 und 6 unterscheidet sich von dem Ausführungsbeispiel gemäß Fig. 3 und 4 dadurch, dass die Drehachse 19 um welche das Leiterelement 13 verdrehbar ist, von hinten - oben schräg nach vorn - unten verläuft, so dass das Leiterelement 13 die in Fig. 6 dargestellte leicht von der senkrechten in Richtung des Streuers geneigte "angelehnte" Position einnimmt. In dieser leicht aus der senkrechten geneigten Position ist ein angenehmer Aufstieg auf dem Leiterelement 13 möglich.

Den Leiterelementen 8 und 13 können nicht dargestellte Mittel zugeordnet sein, die das Leiterelement 8 oder 13 bei nicht abgeschalteten Antrieb der Schleuderscheiben in der Schutzposition mittels geeigneter Mittel zwangsweise verriegeln.

Weiterhin können nicht dargestellte Mittel vorhanden sein, die beim Entfernen des Leiterelementes 8 oder 13 aus der Schutzposition den Antrieb der Schleuderscheiben mittels geeigneter Mittel abschalten.

## Patentansprüche

1. Schleuderdüngerstreuer mit einem Rahmen und Vorratsbehälter, unter dem angetriebene Schleuderscheiben angeordnet sind, wobei ein Schutzelement, beispielsweise ein Schutzbügel vorgesehen ist, welcher sich in Draufsicht gesehen außerhalb der äußeren Teile der Schleuderscheiben befindet und in Teilbereichen als Leiterelement ausgebildet ist, **dadurch gekennzeichnet, dass** das Leiterelement (8, 13) mehrere Leitersprossen (9) aufweist, dass das Leiterelement (8, 13) aus einer liegenden Schutzposition in eine aufrechte Aufstiegsposition und umgekehrt bringbar ist.

2. Schleuderdüngerstreuer nach Anspruch 1, **dadurch gekennzeichnet, dass** das Leiterelement (13) um eine in Fahrtrichtung (18) des Streuers weisende Drehachse (17, 19) verdrehbar angeordnet ist.

3. Schleuderdüngerstreuer nach einem oder mehreren der vorstehenden Ansprüche, **dadurch gekennzeichnet, dass** die Drehachse (19) des Leiterelementes (13) geringfügig nach schräg vorn unten geneigt ist.

4. Schleuderdüngerstreuer nach einem oder mehreren der vorstehenden Ansprüche, **dadurch gekennzeichnet, dass** das Leiterelement (8, 13) in der Schutz- und in der Aufstiegsposition jeweils mittels Verriegelungsmittel (11, 12, 16) festsetz- und/oder verriegelbar ist.

5. Schleuderdüngerstreuer nach einem oder mehreren der vorstehenden Ansprüche, **dadurch gekennzeichnet, dass** das Leiterelement mittels eines Drehgelenkes (14) am Rahmen angeordnet ist.

6. Schleuderdüngerstreuer nach Anspruch 1, **dadurch gekennzeichnet, dass** das Leiterelement (8) mittels geeigneter Mittel (11, 12) wahlweise in die Schutzposition oder in die Aufstiegsposition an dem Streuer einhängbar ist.

7. Schleuderdüngerstreuer nach Anspruch 6, **dadurch gekennzeichnet, dass** die Einhängmittel (12) am Rahmen (2) und/oder am Vorratsbehälter (1) angeordnet sind.

8. Schleuderdüngerstreuer nach einem oder mehreren der vorstehenden Ansprüche, **dadurch gekennzeichnet, dass** an dem Streuer eine Trägerelemente (11) aufweisende Beleuchtungseinrichtung (10) angeordnet ist, dass das Leiterelement in seiner Schutzposition mit den Trägerelementen (11) der Beleuchtungseinrichtung verbindbar ist.

9. Schleuderdüngerstreuer nach einem oder mehreren der vorstehenden Ansprüche, **dadurch gekennzeichnet, dass** Mittel vorhanden sind, die bei Entfernen des Leiterelementes (8, 13) aus der Schutzposition den Antrieb der Schleuderscheiben abschalten.

10. Schleuderdüngerstreuer nach Anspruch 1, **dadurch gekennzeichnet, dass** Mittel vorhanden sind, die das Leiterelement (8, 13) bei nicht abgeschalteten Antrieb der Schleuderscheiben in der Schutzposition zwangsweise verriegeln.

## Claims

1. Centrifugal fertiliser broadcaster including a frame and hopper, below which are disposed driven centrifugal discs, wherein a protective member is provided, for example a protective framework, which, when viewed in top view, is situated outside the outer parts of the centrifugal discs and in part regions is in the form of a ladder member, **characterised in that** the ladder member (8, 13) includes a plurality of ladder rungs (9), **in that** the ladder member (8, 13) is moveable out of a horizontal protective position into an upright climbing position and vice versa.

2. Centrifugal fertiliser broadcaster according to claim 1, **characterised in that** the ladder member (13) is disposed so as to be rotatable about an axis of rotation (17, 19) that points in the direction of travel (18) of the broadcaster.

3. Centrifugal fertiliser broadcaster according to one or more of the preceding claims, **characterised in that** the axis of rotation (19) of the ladder member (13) is inclined slightly forwards and downwards.

4. Centrifugal fertiliser broadcaster according to one or more of the preceding claims, **characterised in that** the ladder member (8, 13) is securable and / or lockable in the protective position and in the climbing position in each case through the intermediary of locking means (11, 12, 16).

5. Centrifugal fertiliser broadcaster according to one or more of the preceding claims, **characterised in that** the ladder member is disposed on the frame through the intermediary of a pivot joint (14).

6. Centrifugal fertiliser broadcaster according to claim 1, **characterised in that** the ladder member (8) is suspended on the broadcaster through the intermediary of suitable means (11, 12) so as to move optionally into the protective position or into the climbing position.

7. Centrifugal fertiliser broadcaster according to claim 6, **characterised in that** the suspending means (12) are disposed on the frame (2) and / or on the hopper (1).

8. Centrifugal fertiliser broadcaster according to one or more of the preceding claims, **characterised in that** a lighting device (10) that includes a carrier member (11) is disposed on the broadcaster, **in that**, in its protective position, the ladder member is connectable to the carrier member (11) of the lighting device.

9. Centrifugal fertiliser broadcaster according to one or more of the preceding claims, **characterised in that** means are available that switch off the drive of the centrifugal discs when the ladder member (8, 13) is taken out of the protective position.

10. Centrifugal fertiliser broadcaster according to claim 1, **characterised in that** means are available that lock the ladder member (8, 13) in the protective position in a forced manner when the drive of the centrifugal discs is not switched off.

## Revendications

1. Epandeur centrifuge d'engrais comportant un châssis et un réservoir sous lequel sont installés des disques d'épandage, entraînés, avec un élément de protection, par exemple un arceau de protection, prévu qui en vue de dessus se trouve au-delà des parties extérieures des disques d'épandage et est réalisé sous la forme d'un élément d'échelle dans des zones partielles,
**caractérisé en ce que**
l'élément d'échelle (8, 13) comporte plusieurs barreaux (9) et l'élément d'échelle (8, 13) peut être mis d'une position de protection, couchée, dans une position de montée, redressée, et inversement.

2. Epandeur centrifuge d'engrais selon la revendication 1,
**caractérisé en ce que**
l'élément d'échelle (13) peut tourner autour d'un axe de rotation (17, 18) dirigé dans la direction de déplacement (18) de l'épandeur.

3. Epandeur centrifuge d'engrais selon l'une ou plusieurs des revendications précédentes,
**caractérisé en ce que**
l'axe de rotation (19) de l'élément d'échelle (13) est incliné légèrement vers l'avant et le bas.

4. Epandeur centrifuge d'engrais selon une ou plusieurs des revendications précédentes,
**caractérisé en ce que**
l'élément d'échelle (8, 13) se bloque et/ou se verrouille dans la position de protection et dans la position de montée à l'aide chaque fois de moyens de verrouillage (11, 12, 16).

5. Epandeur centrifuge d'engrais selon une ou plusieurs des revendications précédentes,
**caractérisé en ce que**
l'élément d'échelle est fixé au châssis par l'intermédiaire d'une articulation de pivotement (14).

6. Epandeur centrifuge d'engrais selon la revendication 1,
**caractérisé en ce que**
l'élément d'échelle (8) peut être accroché au choix à l'aide de moyens appropriés (11, 12) dans la position de protection ou dans la position de montée sur l'épandeur.

7. Epandeur centrifuge d'engrais selon la revendication 6,
**caractérisé en ce que**
les moyens d'accrochage (12) sont prévus sur le châssis (2) et/ou le réservoir (1).

8. Epandeur centrifuge d'engrais selon une ou plusieurs des revendications précédentes,
**caractérisé en ce qu'**
une installation d'éclairage (10) comportant un élément de support (11) est prévue sur l'épandeur et en position de protection, l'élément d'échelle peut être relié à l'élément de support (11) de l'installation d'éclairage.

9. Epandeur centrifuge d'engrais selon une ou plusieurs des revendications précédentes,
**caractérisé par**
des moyens qui lorsqu'on enlève l'élément d'échelle (8, 13) de la position de protection coupent l'entraînement des disques d'épandage.

10. Epandeur centrifuge d'engrais selon la revendication 1,
**caractérisé par**
des moyens qui verrouillent nécessairement l'élément d'échelle (8, 13) dans la position de protection si l'entraînement des disques d'épandage n'est pas coupé.
